# EUROPEAN PATENT APPLICATION

(11) **EP 4 450 196 A1**
(43) Date of publication of application: **23.10.2024**
(21) Application number: 23168861.5
(22) Date of filing: 20.04.2023
(51) Int. Cl.: B23B 27/16, B23B 27/14, B23B 27/00

(54) **TURNING TOOL KIT AND CUTTING INSERT THEREFOR**

(71) Applicant: AB Sandvik Coromant, 811 81 Sandviken (SE)
(72) Inventor: WICKSTRÖM, David, 811 81 Sandviken (SE); LÖF, Ronnie, 811 81 Sandviken (SE); WIKBLAD, Krister, 811 81 Sandviken (SE)
(74) Representative: Sandvik

(57) **Abstract**

The invention relates to a turning tool kit (100) for turning operations, comprising
a tool body (1) and at least a first cutting insert (6) and a second cutting insert (6'), each cutting insert being selectively arrangeable in a seat (5) in the tool body. Each of the first and the second cutting inserts (6, 6') includes at least two cutting edges (10, 10'), each cutting edge including a nose cutting edge (101, 101') separating and connecting a forward cutting edge (102, 102') and a rearward cutting edge (103, 103'). The forward cutting edge (102) of each of the at least two cutting edges (10) on the first cutting insert (6) forms a first acute angle (A) to the respective rearward cutting edge (103), whereas the forward cutting edge (102') of each of the at least two cutting edges (10') on the second cutting insert (6') forms a second acute angle (B) to the respective rearward cutting edge (103'), wherein the second acute angle (B) is greater than the first acute angle (A). The forward cutting edge (102') of each of the at least two cutting edges (10') on the second cutting insert (6') transitions into an auxiliary non-cutting edge (104') that forms an angle to the respective rearward cutting edge (103') that is the same, or substantially the same, as the first acute angle (A). The invention also relates to a cutting insert (6', 6") for use in such a turning tool kit.

## Description

### TECHNICAL FIELD

The invention relates to metal cutting and in particular to turning tools and cutting inserts therefor.

### BACKGROUND ART

Within the field of metal cutting, a turning tool may be used for machining the surface of a rotating workpiece, for example the inner surface of a hole in the workpiece. This is referred to as internal turning or boring. In such machining operations, the tool may extend along a central axis that is parallel to the rotational axis of the workpiece.

The turning tool usually includes a cutting insert made of a wear resistant material, such as cemented carbide, which is arranged to engage the workpiece surface.

For manufacturing a component, a plurality of machining operations may be required, and different tools may be used for different operations. A turning tool is usually designed for holding a single cutting insert of a certain geometry adapted for a certain machining operation.

EP3456442 discloses a turning tool having two different cutting inserts mounted at the front end of the tool body, one cutting insert for roughing and one cutting insert for finishing. Thereby, different turning operations may be performed by the same turning tool without requiring a tool change.

However, current turning tools are still not very versatile when it comes to performing a plurality of different turning operations in an optimal way, e.g. with respect to the profile of the machined surface.

Hence, there is need for versatile turning tools that can be used in an increased number of different situations and applications.

### SUMMARY

It is an object of the present invention to mitigate the shortcomings of the prior art and to provide a turning tool kit, and cutting inserts therefor, that can be used in a large number of different turning operations such that the number of required tool changes can be reduced when manufacturing a component.

Hence, according to a first aspect, the invention relates to a turning tool kit for turning operations, comprising a tool body including a front end, a rear end, a central axis extending from the front end to the rear end, and a seat for accommodating a cutting insert. The turning kit further comprises at least a first cutting insert and a second cutting insert, each selectively arrangeable in the seat, wherein each of the first and the second cutting inserts includes a first side and a second side arranged opposite each other and facing opposite directions, a peripheral surface connecting the first side and the second side, and at least two cutting edges, each cutting edge being arranged at an intersection between the first side and the peripheral surface and including a nose cutting edge separating and connecting a forward cutting edge and a rearward cutting edge. The forward cutting edge of each of the at least two cutting edges on the first cutting insert, when seen in a plan view of the first side of the first cutting insert, forms a first acute angle to the respective rearward cutting edge. The forward cutting edge of each of the at least two cutting edges on the second cutting insert, when seen in a plan view of the first side of the second cutting insert, forms a second acute angle to the respective rearward cutting edge, wherein the second acute angle is greater than the first acute angle. The forward cutting edge of each of the at least two cutting edges on the second cutting insert transitions into an auxiliary non-cutting edge that, when seen in a plan view of the first side of the second cutting insert, forms an angle to the respective rearward cutting edge that is the same, or substantially the same, as the first acute angle.

Thereby, cutting inserts that are optimized for different situations can be selectively used in the same tool body, thus potentially reducing the number of tool changes required when manufacturing components.

For longitudinal turning operations, a cutting insert having a forward cutting edge and a rearward cutting edge will be able to cut in both a forward feed direction and a rearward feed direction, i.e. directions parallel to the rotation axis of the workpiece (which, for internal turning operations, normally is parallel also to the central axis of the turning tool body). For example, in an internal turning operation, such turning tool may be used in a forward machining operation wherein the turning tool is moved into the hole. In such forward machining operation, the forward cutting edge will act as a main cutting edge (at least if the cutting depth is large), and the nose cutting edge will generate the surface.

When machining in the forward direction, it may be beneficial to use different forward entering angles depending on the machining operation being performed. The forward entering angle is to be understood as the angle formed by the forward cutting edge with respect to the feed direction during longitudinal turning, i.e. with respect to the rotation axis of the workpiece.

Each of the first and the second cutting inserts includes at least two cutting edges and is thus indexable, such that one of the at least two cutting edges will be active, i.e. located in an active position for machining a workpiece, when the cutting insert is mounted in the seat in one of the available indexing positions. When the first cutting insert is mounted in the seat, the peripheral surface adjacent a forward cutting edge that is not in an active position will function as a contact surface abutting a support surface in the seat. The inventors have found that by designing the second cutting insert in accordance with the present disclosure, similar contact surfaces will be provided also on the second cutting insert. Thus, the second cutting insert will fit in the seat due to that the forward cutting edge transitions into an auxiliary non-cutting edge that extends in a similar manner as the forward cutting edge of the first cutting insert. In effect, when the first cutting insert is arranged in the seat with one of its cutting edges arranged in an active position, the active forward cutting edge of the first cutting insert will extend in a first plane, and when the second cutting insert is arranged in the seat with one of its cutting edges arranged in an active position, the auxiliary non-cutting edge that adjoins the active forward cutting edge of the second cutting insert will extend in the same first plane. Accordingly, when the second cutting insert is mounted in the seat, the peripheral surface adjacent an auxiliary non-cutting edge that adjoins a forward cutting edge that is not in an active position will function as a contact surface abutting a corresponding support surface in the seat.

The nose cutting edges of the first cutting insert may have a similar geometry as the nose cutting edges of the second cutting insert. However, the respective geometries of the nose cutting edges of the first and the second cutting inserts may also differ significantly without affecting the mountability of the cutting inserts in the seat, which further increases the potential versatility of the turning tool kit. Hence, with a turning tool kit according to the invention, the same turning tool body can be used for machining multiple different kinds of surfaces and profiles.

A "turning tool" should be understood as a cutting tool used for machining a rotating workpiece. Such tool, in the context of machining the internal surface of a hole in a rotating workpiece, is sometimes also referred to as a boring bar. The central axis of such turning tool for internal turning is usually parallel, but not coaxial, with the rotation axis of the workpiece.

The term "cutting edge" as used herein, if not specified otherwise, should be understood as the combination of cutting edge segments that together form a complete cutting edge, in this case comprising at least a nose cutting edge, a forward cutting edge and a rearward cutting edge.

Each of the forward and rearward cutting edges may be straight in a plan view of the first side of the cutting insert, whereas the nose cutting edge may be convexly curved in such plan view, e.g. arc-shaped. Thus, in such view, the nose cutting edge may be formed by a single radius connecting the forward cutting edge to the secondary cutting edge. Alternatively, the nose cutting edge may include multiple curved segments of different radii, and possibly also straight, or substantially straight, segments, for example such as to form a so-called wiper cutting edge.

As used herein with reference to a cutting edge, the acute angle that is formed by the forward cutting edge to the rearward cutting edge should be understood as the acute angle at which an extension of the forward cutting edge crosses a corresponding extension of the rearward cutting edge, i.e. the angle at which a virtual line continuing from, and along the same direction as, the forward cutting edge crosses a corresponding virtual line continuing from, and along the same direction as, the rearward cutting edge, when seen in a plan view of the first side of the cutting insert.

In this context, a second acute angle that is "substantially the same" as the first acute angle, should be understood as an angle that is the same within reasonable production tolerances of the cutting inserts, and at least close enough for obtaining the effect, i.e. such that each of the cutting inserts are arrangeable in the seat of the tool body.

According to some embodiments, when the first cutting insert is arranged in the seat with one of its cutting edges arranged in an active position, the active forward cutting edge of the first cutting insert forms an obtuse first forward entering angle, and, when the second cutting insert is arranged in the seat with one of its cutting edges arranged in an active position, the active forward cutting edge of the second cutting insert forms an obtuse second forward entering angle, wherein the second forward entering angle is smaller than the first forward entering angle. According to some embodiments, the first forward entering angle is at least 2° greater and at most 15° greater than the second forward entering angle, and for example between 8° and 12°, such as 10°, greater.

For example, the first forward entering angle may be between 95° and 115° and the second forward entering angle may be between 90° and 100°.

The second cutting insert may be used in a forward machining operation where a large cutting depth is desired. The second forward entering angle is preferably relatively close to 90°, for example between 90° and 95°. Using a larger forward entering angle combined with a large cutting depth might result in an unfavorable chip forming process wherein the chips formed will obtain a "sawtooth" shape at the periphery thereof that could damage the cutting edge. Therefore, for many materials, a second forward entering angle of up to, but not more than, 95° may be suitable. However, for some materials, it might be possible to use a slightly larger second forward entering angle, in some cases up to 100°.

The first cutting insert, for which the forward entering angle is relatively large, would be less suitable for use in a forward machining operation with a large cutting depth, due to the problems discussed above, but may instead be used with a small cutting depth in applications where a large forward entering angle is required, e.g. for profiles that cannot be machined otherwise.

According to some embodiments, a maximum distance between respective nose cutting edges of any two cutting edges of the at least two cutting edges on the first cutting insert is different than a maximum distance between respective nose cutting edges of any two cutting edges of the at least two cutting edges on the second cutting insert.

The turning tool kit may include more than two different cutting inserts having different forward entering angles and/or different nose cutting edge geometries. Thus, according to some embodiments, the turning tool kit includes a third cutting insert that, similar to the second cutting insert, has a first side and a second side arranged opposite each other and facing opposite directions, and a peripheral surface connecting the first side and the second side, and at least two cutting edges, each cutting edge being arranged at an intersection between the first side and the peripheral surface and including a nose cutting edge separating and connecting a forward cutting edge and a rearward cutting edge. The forward cutting edge of each of the at least two cutting edges on the third cutting insert, when seen in a plan view of the first side of the third cutting insert, forms a third acute angle to the respective rearward cutting edge, wherein the third acute angle is greater than the first acute angle, and wherein the forward cutting edge of each of the at least two cutting edges on the third cutting insert transitions into an auxiliary non-cutting edge that, when seen in a plan view of the first side of the third cutting insert, forms an angle to the respective rearward cutting edge that is the same, or substantially the same, as the first acute angle.

The third acute angle may be different from the second acute angle, but may also be the same as the second acute angle. The geometry of the nose cutting edges of the third cutting insert may be different from the geometry of the nose cutting edges of the first cutting insert and/or the geometry of the nose cutting edges of the second cutting insert.

According to a second aspect, the invention relates to a cutting insert for a turning tool kit according to any of the embodiments described herein, wherein the cutting insert comprises a first side and a second side arranged opposite each other and facing opposite directions, a peripheral surface connecting the first side and the second side, and at least two cutting edges, each cutting edge being arranged at an intersection between the first side and the peripheral surface and including a nose cutting edge separating and connecting a forward cutting edge and a rearward cutting edge. For each of the at least two cutting edges, the forward cutting edge transitions into an auxiliary non-cutting edge. When the cutting insert is seen in a plan view of the first side, the auxiliary non-cutting edge forms a first acute angle to the rearward cutting edge, and the forward cutting edge forms a second acute angle to the rearward cutting edge, wherein the second acute angle is greater than the first acute angle.

Such cutting insert corresponds to the second cutting insert of a turning tool kit as defined above, and thus includes the adaptations required to be mountable in the seat of a turning tool body that is originally designed for a cutting insert that has cutting edges with an angle between the rearward cutting edge and the forward cutting edge that corresponds to the first acute angle.

According to some embodiments, the second acute angle is at least 2° and at most 15° greater than the first acute angle, and for example between 8° and 12°, such as 10°, greater.

According to some embodiments, the first acute angle is between 30° and 70°. For example, the first acute angle may be between 35° and 45°, for example 40°.

According to some embodiments, the second acute angle is between 32° and 85°. For example, the second acute angle may be between 45° and 55°, for example 50°.

The cutting insert may have two cutting edges, such that the cutting insert is indexable two times. In other embodiments, the cutting insert may have three cutting edges, such that the cutting insert is indexable three times.

According to some embodiments, the length of the forward cutting edge of the cutting insert is at most 15 % of the maximum distance between respective nose cutting edges of any two of the at least two cutting edges. A relatively short forward cutting edge will provide for sufficiently large contact surfaces on the peripheral surface of the cutting insert such that the cutting insert can be securely mounted in the seat. As an example, the length of the forward cutting edge of the cutting insert may be between 5-10 % of the maximum distance between respective nose cutting edges of any two of the at least two cutting edges.

According to some embodiments, the forward cutting edge of the cutting insert transitions into the auxiliary non-cutting edge via a radiused transition. Such radiused transition may be formed by a single radius. In other embodiments, the transition may be sharp.

When the transition is a radiused transition, i.e. having a non-zero extension in a plan view of the first side of the cutting insert, the length of the forward cutting edge should be understood as the distance from the point on the cutting edge at which the nose cutting edge ends to the point at which such transition begins.

The cutting insert may be made of a wear resistant material, such as cemented carbide.

### BRIEF DESCRIPTION OF DRAWINGS

The solution will now be described in more detail by means of exemplary embodiments and with reference to the accompanying drawings, in which:
Fig. 1 illustrates a turning tool kit according to an embodiment, wherein the turning tool kit includes a tool body and three different cutting inserts.
Fig 2a illustrates the tool body with the first cutting insert arranged thereto.
Fig 2b illustrates the tool body with the second cutting insert arranged thereto.
Fig 2c illustrates the tool body with the third cutting insert arranged thereto.
Figs. 3a is a plan view of the first side of the first cutting insert.
Fig. 3b is a side view of the first cutting insert as seen from a direction IIIb indicated in Fig. 3a.
Figs. 4a is a plan view of the first side of the second cutting insert.
Fig. 4b is a side view of the second cutting insert as seen from a direction IVb indicated in Fig. 4a.
Figs. 5a is a plan view of the first side of the third cutting insert.
Fig. 5b is a side view of the third cutting insert as seen from a direction Vb indicated in Fig. 5a.
Fig. 6 shows the seat in the tool body.
Fig. 7 schematically illustrates the emplacement of the three different cutting inserts when mounted in the seat in the tool body.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### DETAILED DESCRIPTION OF EMBODIMENTS

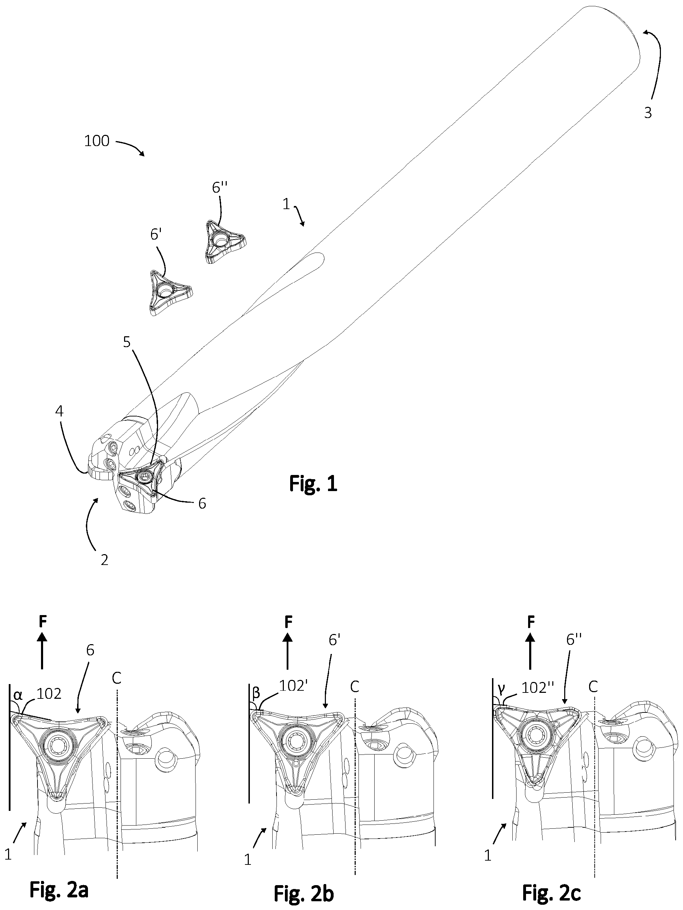

Fig. 1 shows a turning tool kit 100 including a turning tool body 1 and a first cutting insert 6, a second cutting insert 6' and a third cutting insert 6", each cutting insert designed to fit in an seat 5 in the tool body 1. In the illustrated embodiment, an additional cutting insert 4 is also arranged to the tool body. The additional cutting insert 4 is a roughing insert intended to be used in an initial machining operation before machining the surface with one of the first, second or third cutting inserts 6, 6', 6".

The tool body 1 has a front end 2 and a rear end 3. A central axis C (illustrated in Figs. 2a-2c) extends longitudinally through the tool body 1 from the front end 2 to the rear end 3.

As illustrated in Fig. 2a, the first cutting insert, when mounted in the seat 5 of the tool body 1, has a forward cutting edge 102 that, when machining in a forward direction during longitudinal turning, forms an obtuse forward entering angle α with respect to the feed direction F. The feed direction F is parallel to the rotation axis of the workpiece (and in the illustrated embodiment also parallel to the central axis C of the tool body). If the machining operation is an internal turning operation, the feed direction F corresponds to a direction into the machined hole.

The forward entering angle α of the first cutting insert 6 is much greater than 90°, in this case approximately 102°. Such forward entering angle may be required for certain applications, for example when a particular profile is to be machined inside a hole. However, a disadvantage of such relatively large entering angle is that it may result in an unfavorable chip forming process, wherein the chips formed will obtain a "sawtooth" shape at the periphery thereof that could damage the cutting edge. To avoid such problems, a cutting depth not exceeding 2/3 of the nose edge is preferably used in a forward cutting operation using such cutting insert.

Therefore, in other applications, for example when no tight profiles are to be machined, it may be better to use a forward entering angle that is closer to 90°, which would allow for a greater cutting depth, resulting in increased productivity, since the forward cutting edge then may be engaged in cutting without any of the problems mentioned above. A forward entering angle of up to, but not more than, 95° may be suitable for many materials. For some materials, it might be possible to use a slightly larger forward entering angle, in some cases up to 100°.

Accordingly, as illustrated in Figs. 2b-2c, the second cutting insert 6', providing a forward entering angle β, or the third cutting insert 6", providing a forward entering angle γ, could be mounted in the seat 5 in order to allow for a greater cutting depth when machining in the feed direction F (i.e. the forward direction). In the illustrated embodiment, the forward entering angle β of the second cutting insert 6' is the same as the forward entering angle γ of the third cutting insert 6" (in this case approximately 92°). Hence, in the illustrated embodiment, the difference between the second cutting insert 6' and the third cutting insert 6" does not reside in the forward entering angle but in the respective nose edge geometries, as will be described in more detail below. However, according to other embodiments, the turning tool kit may include multiple different cutting inserts all having different forward entering angles.

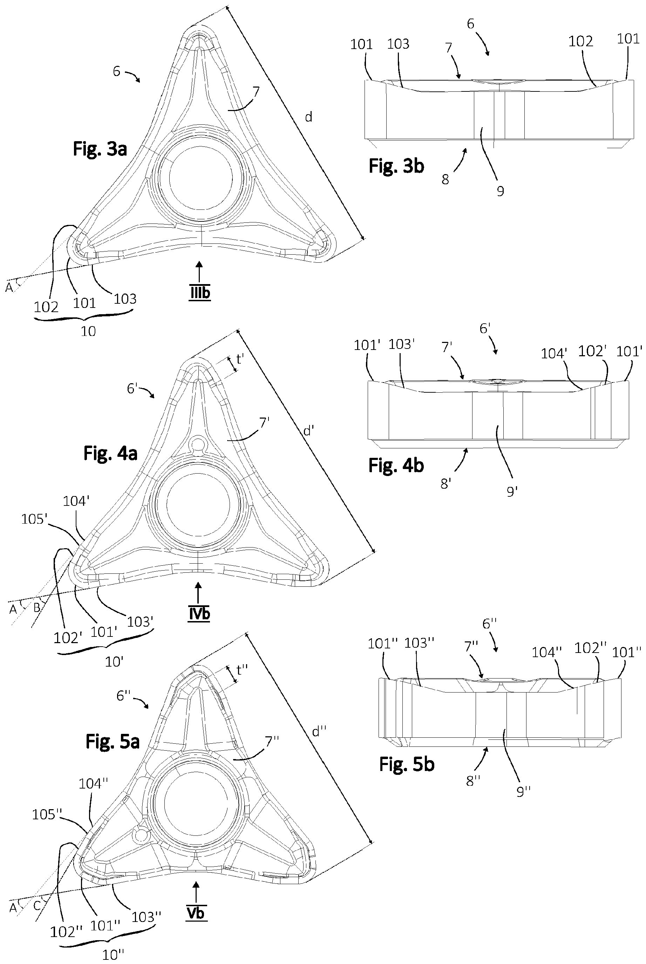

Figs. 3a and 3b illustrate the first cutting insert 6 in more detail. The first cutting insert 6 has a first side 7, a second side 8 and a peripheral surface 9, and includes three cutting edges 10 formed at intersections between the first side 7 and the peripheral surface 9. Accordingly, parts of the first side 7 located adjacent the cutting edges 10 correspond to rake faces of the respective cutting edges 10, and parts of the peripheral surface 9 located adjacent the cutting edges 10 correspond to clearance faces of the respective cutting edges 10. Each cutting edge 10 includes the forward cutting edge 102 as well as a nose cutting edge 101 and a rearward cutting edge 103. In a plan view of the first side 7 of the cutting inert 6, as shown in Fig. 3a, the forward cutting edge 102 forms an acute angle A to the rearward cutting edge 103, or, more precisely, an extension of the forward cutting edge 102 (i.e. a virtual line continuing from and along the same direction as the forward cutting edge 102) crosses a corresponding extension of the rearward cutting edge 103 at an acute angle A, which in the illustrated embodiment is approximately 40°. Since the cutting insert 6 is indexable, i.e. has more than one cutting edge 10, the geometry of the cutting edges 10, including the acute angle A, will affect the design of the seat 5 since the seat 5 must be able to securely accommodate and provide support for the cutting insert 6 along at least some parts of the peripheral surface 9. In other words, the required location and extension of support surfaces in the seat 5, that are arranged to abut portions of the peripheral surface 9 of the cutting insert 6, will depend on the extension of the cutting edges 10 of the cutting insert, and in particular on the acute angle A.

Figs. 4a and 4b illustrate the second cutting insert 6' in more detail. Similar to the first cutting insert 6, the second cutting insert 6' has a first side 7', a second side 8' and a peripheral surface 9', and includes three cutting edges 10' formed at intersections between the first side 7' and the peripheral surface 9'. Each cutting edge 10' includes the forward cutting edge 102' as well as a nose cutting edge 101' and a rearward cutting edge 103'. In a plan view of the first side 7' of the second cutting inert 6', as shown in Fig. 4a, the forward cutting edge 102' forms an acute angle B to the rearward cutting edge 103', which in the illustrated embodiment is approximately 50°.

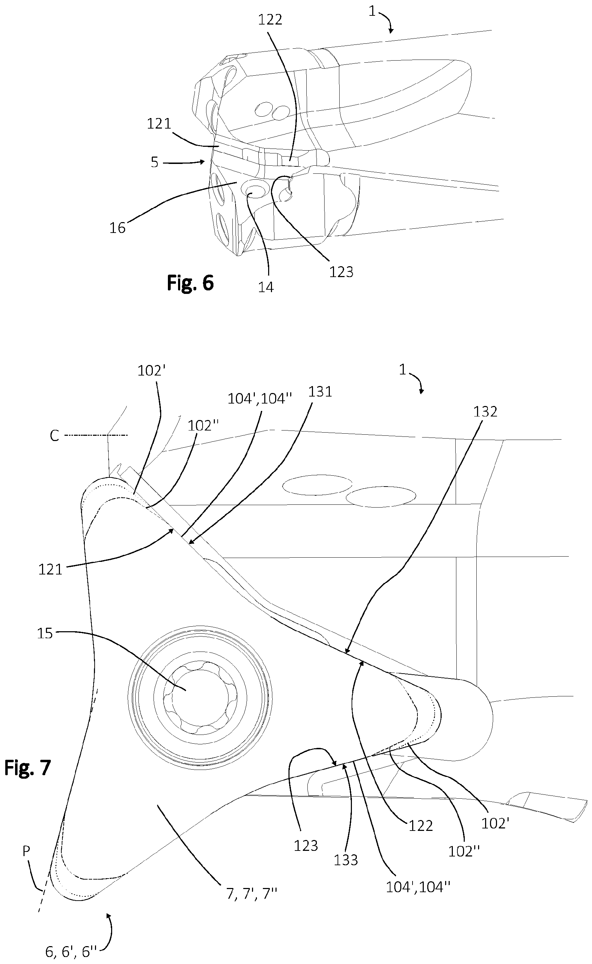

In contrast to the first cutting insert 6, the forward cutting edge 102' of the second cutting insert 6' has a relatively short extension, and transitions into an auxiliary non-cutting edge 104', via a radiused transition 105'. The auxiliary non-cutting edge 104' forms the angle A to the rearward cutting edge 103'. As a consequence, the second cutting insert 6' can be arranged in the seat 5 even though its forward cutting edge 102' has a different extension than the forward cutting edge 102 of the first cutting insert 6. This will be further explained below with reference to figs. 6 and 7.

Figs. 5a and 5b illustrate the third cutting insert 6' ' in more detail. Similar to the first cutting insert 6 and the second cutting insert 6', the third cutting insert 6" has a first side 7", a second side 8" and a peripheral surface 9", and includes three cutting edges 10" formed at intersections between the first side 7" and the peripheral surface 9". Each cutting edge 10" includes the forward cutting edge 102" ' as well as a nose cutting edge 101" and a rearward cutting edge 103". In a plan view of the first side 7" of the third cutting inert 6", as shown in Fig. 5a, the forward cutting edge 102' ' forms an acute angle C to the rearward cutting edge 103", which in the illustrated embodiment is approximately 50°.

Similar to the second cutting insert 6', the forward cutting edge 102" ' of the third cutting insert 6" has a relatively short extension, and transitions into an auxiliary non-cutting edge 104", via a radiused transition 105". The auxiliary non-cutting edge 104' ' forms the angle A to the rearward cutting edge 103". Thereby, also the third cutting insert 6" can be arranged in the seat 5.

In the illustrated embodiment, the acute angle C for the third cutting insert 6" is the same as the acute angle B for the second cutting insert 6'. The main difference between the third cutting insert 6' ' and the second cutting insert 6' is the design of the respective nose cutting edges 101', 101". The nose cutting edge 101" of the third cutting insert 6" has a wiper design and thus includes multiple different sections of different curvature, whereas the nose edge 101' of the second cutting insert 6" is formed by a single radius, similar to the nose edge 101 of the first cutting insert 6. Accordingly, the second and the third cutting inserts 6', 6" will have the same forward entering angle when mounted in the seat 5, and the choice of which cutting insert to use is rather based on what nose cutting edge geometry that is preferred. The nose cutting edge 101" of the third cutting insert 6 ", that includes a wiper geometry, may be suitable for efficiently machining a surface of high quality and might be preferred when machining an internal surface without any varying profiles, e.g. a cylindrical hole, but is not possible to use in many other cases when machining detailed profiles. In such situations, one of the second cutting insert 6' or the first cutting insert 6 may be used instead.

The seat 5, shown in more detail in Fig. 6, includes a first, a second and a third side support surface 121, 122, 123 arranged to abut respective first, second and third side contact surfaces 131, 132, 133 located on the peripheral surface 9, 9', 9" of each of the cutting inserts 6, 6', 6". Moreover, the seat 5 includes a bottom support surface 16 arranged to abut at least portions of the respective second surfaces 8, 8', 8" of each of the cutting inserts 6, 6', 6" when the cutting insert is mounted in the seat 5. The bottom support surface 16 includes a threaded hole 14.

Figure 7 schematically illustrates the location of each of the first, second and third cutting inserts 6, 6', 6" when mounted in the seat 5. It should be noted, though, that this is only for illustrative purposes and that the three different cutting inserts 6, 6', 6" cannot be mounted simultaneously in the seat 5. The outline of the first cutting insert 6 is shown in solid lines, whereas the outline of the second cutting insert 6' is indicated in dashed lines and the outline of the third cutting insert 6" ' is indicated in dotted lines. For clarity, the respective first sides 7, 7', 7" ' of the respective cutting inserts are shown without the geometric details illustrated in figs. 1-5 (including chip breakers, etc.). As seen in Fig. 7, the respective peripheral surfaces 9, 9', 9" ' of the cutting inserts 6, 6', 6" ' include corresponding first, second and third contact surfaces 131, 132, 133 that are arranged to abut the associated first, second and third support surfaces 121, 122, 123 in the seat 5. Thereby, irrespective of which of the three cutting inserts 6, 6', 6' ' that is mounted in the seat 5, the cutting insert will be securely accommodated in the seat when mounted therein. The cutting insert may be fixed in the seat by using a fastening element 15, such as a screw, extending through a central hole in the cutting insert into the threaded hole 14 in the seat 5.

When the first cutting insert 6 is arranged in the seat 5, its active forward cutting edge (the cutting edge extending radially outwards from the tool body) extends in a first plane P. When the second cutting insert 6' or the third cutting insert 6" is arranged in the seat 5, the respective auxiliary non-cutting edge adjoining the active forward cutting edge thereof extends in the same first plane P.

As shown in fig. 7, the first contact surface 131 and the third contact surface 133 of the second and third cutting inserts 6', 6" are located on the peripheral surface 9', 9" below the auxiliary non-cutting edges 104', 104' ' that adjoin the two inactive forward cutting edges 102', 102". To assure that the contact surfaces 131, 133 on each of the second and third cutting inserts 6', 6" are sufficiently large to provide good support, the respective forward cutting edges 102', 102" should not be too long. Therefore, in relation to the maximum distance d' between two nose cutting edges 101' of the second cutting insert 6', the length t' (illustrated in Fig. 4a) of each forward cutting edge 102' of the second cutting insert 6' is preferably relatively short, for example below 15% of the maximum distance d'.

Correspondingly, in relation to the maximum distance d'' between two nose cutting edges 101" of the third cutting insert 6", the length t" (illustrated in Fig. 5a) of each forward cutting edge 102" ' of the third cutting insert 6' is preferably relatively short, for example below 15% of the maximum distance d".

In the embodiments illustrated in Figs. 4a and 5a, the lengths t', t" are only about 6-8 % of the respective maximum distances d', d". Such length would normally be sufficient and would cover most cutting depths that could be relevant.

For each of the second cutting insert 6' and the third cutting insert 6 ", the forward cutting edge 102', 102" ' transitions into the auxiliary non-cutting edge 104', 104' ' via a radiused transition 105', 105". The length of the forward cutting edge 102', 102 " is measured from the point on the cutting edge at which the nose cutting edge 101', 101" ends to the point at which the transition 105' , 105" begins.

With a turning tool kit according to the illustrated embodiment, the maximum distances d', d" between nose cutting edges 101 ' , 101" of the second and third cutting inserts 6', 6" is smaller than the maximum distance d between nose cutting edges 101 of the first cutting insert. As a consequence, the active nose cutting edges 101, 101', 101" of each of the first, second and third cutting inserts 6, 6', 6" will, when mounted in the seat 5, be located at different radial distances from the central axis C of the tool body 1, as seen in Fig. 7. However, such difference is easily taken into account in the machine control when machining a workpiece.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited.

## Claims

1. A turning tool kit (100) for turning operations, comprising
- a tool body (1) including
- a front end (2),
- a rear end (3),
- a central axis (C) extending from the front end (2) to the rear end (3), and
- a seat (5) for accommodating a cutting insert; and
- at least a first cutting insert (6) and a second cutting insert (6'), each selectively arrangeable in the seat (5), wherein each of the first and the second cutting inserts (6, 6') includes
- a first side (7, 7') and a second side (8, 8') arranged opposite each other and facing opposite directions,
- a peripheral surface (9, 9') connecting the first side and the second side,
- at least two cutting edges (10, 10'), each cutting edge being arranged at an intersection between the first side (7, 7') and the peripheral surface (9, 9') and including a nose cutting edge (101, 101') separating and connecting a forward cutting edge (102, 102') and a rearward cutting edge (103, 103');
wherein the forward cutting edge (102) of each of the at least two cutting edges (10) on the first cutting insert (6), when seen in a plan view of the first side (7) of the first cutting insert (6), forms a first acute angle (A) to the respective rearward cutting edge (103), and wherein the forward cutting edge (102') of each of the at least two cutting edges (10') on the second cutting insert (6'), when seen in a plan view of the first side (7') of the second cutting insert (6'), forms a second acute angle (B) to the respective rearward cutting edge (103'), wherein the second acute angle (B) is greater than the first acute angle (A), and wherein the forward cutting edge (102') of each of the at least two cutting edges (10') on the second cutting insert (6') transitions into an auxiliary non-cutting edge (104') that, when seen in a plan view of the first side (7') of the second cutting insert (6'), forms an angle to the respective rearward cutting edge (103') that is the same, or substantially the same, as the first acute angle (A).

2. A turning tool kit according to claim 1, wherein, when the first cutting insert (6) is arranged in the seat (5) with one of its cutting edges (10) arranged in an active position, the active forward cutting edge (102) of the first cutting insert (6) forms an obtuse first forward entering angle (α), and, when the second cutting insert (6') is arranged in the seat (5) with one of its cutting edges (10') arranged in an active position, the active forward cutting edge (102') of the second cutting insert (6') forms an obtuse second forward entering angle (β), wherein the second forward entering angle (β) is smaller than the first forward entering angle (α).

3. A turning tool kit according to claim 2, wherein the first forward entering angle (α) is at least 2° and at most 15° greater than the second forward entering angle (β).

4. A turning tool kit according to any of the claims 2-3, wherein the first forward entering angle (α) is between 95° and 115° and the second forward entering angle (β) is between 90° and 100°.

5. A turning tool kit according to any of the previous claims, wherein, when the first cutting insert (6) is arranged in the seat (5) with one of its cutting edges (10) arranged in an active position, the active forward cutting edge of the first cutting insert (6) extends in a first plane (P), and wherein, when the second cutting insert (6') is arranged in the seat (5) with one of its cutting edges (10') arranged in an active position, the auxiliary non-cutting edge that adjoins the active forward cutting edge of the second cutting insert (6') extends in the first plane (P).

6. A turning tool kit according to any of the previous claims, wherein a maximum distance (d) between respective nose cutting edges (101) of any two cutting edges of the at least two cutting edges (10) on the first cutting insert (6) is different than a maximum distance (d') between respective nose cutting edges (101') of any two cutting edges of the at least two cutting edges (10') on the second cutting insert (6').

7. A cutting insert (6', 6") for use in a turning tool kit according to any of the claims 1-6, wherein the cutting insert (6', 6") includes
- a first side (7', 7") and a second side (8', 8") arranged opposite each other and facing opposite directions,
- a peripheral surface (9', 9") connecting the first side and the second side,
- at least two cutting edges (10', 10"), each cutting edge being arranged at an intersection between the first side (7', 7") and the peripheral surface (9', 9") and including a nose cutting edge (101', 101") separating and connecting a forward cutting edge (102', 102") and a rearward cutting edge (103', 103 "), wherein, for each of the at least two cutting edges (10', 10"), the forward cutting edge (102', 102") transitions into an auxiliary non-cutting edge (104', 104"),
wherein, when the cutting insert (10', 10") is seen in a plan view of the first side (7', 7"), the auxiliary non-cutting edge (104', 104") forms a first acute angle (A) to the rearward cutting edge (103', 103"), and the forward cutting edge (102', 102") forms a second acute angle (B, C) to the rearward cutting edge (103', 103"), wherein the second acute angle (B, C) is greater than the first acute angle (A).

8. A cutting insert according to claim 7, wherein the second acute angle (B, C) is at least 2° and at most 15° greater than the first acute angle (A).

9. A cutting insert according to any of the claims 7-8, wherein the first acute angle (A) is between 30° and 70°.

10. A cutting insert according to any of the claims 7-9, wherein the second acute angle (B, C) is between 32° and 85°.

11. A cutting insert according to any of the claims 7-10, wherein the length (t) of the forward cutting edge is at most 15 % of the maximum distance (d) between respective nose cutting edges of any two of the at least two cutting edges.

12. A cutting insert according to any of the claims 7-11, wherein the forward cutting edge (102', 102") transitions into the auxiliary non-cutting edge (104', 104") via a radiused transition (105', 105").
